# EUROPEAN PATENT SPECIFICATION

(11) **EP 0 684 181 B1**
(45) Date of publication and mention of the grant of the patent: **22.08.2001**
(21) Application number: 95107684.3
(22) Date of filing: 19.05.1995
(51) Int. Cl.: B62K 21/12

(54) **Stem for bicycle handlebars in two parts**
Lenkervorbau für zweiteilige Fahrradlenkstange
Potence de guidon pour guidon de bicyclette en deux parties

(30) Priority: 25.05.1994 IT PD940097; 13.01.1995 IT PD950007
(43) Date of publication of application: 29.11.1995
(73) Proprietor: Italmanubri S.p.A., 31037 Loria (IT)
(72) Inventor: Nastrucci, Gianfranco, I-36061 Bassano del Grappa (IT)
(74) Representative: Gustorf, Gerhard, Dipl.-Ing.

(56) References cited:
- DE-U- 9 006 510
- DE-U- 9 300 832
- GB-A- 2 266 079
- US-A- 4 930 798

## Description

The invention relates to a compound adjustable handlebar as set forth in the preamble of claim 1.

In known kinds of handlebars coupling devices are provided having a stem element to join traditional handlebars (one-piece, linear, horizontal but transversal with reference to the direction of movement) to the fork and wheel; these stems allow the handlebars to rotate, but do not allow them to translate in the direction of movement in such a way as to make it possible to adjust the distance of the handlebar barycenter from the saddle.

There are attachments which can be installed on the central part of known handlebars; these attachments extend in the direction of movement and allow the cyclist to rest his elbows on the traditional handlebars and to keep his hands on grips positioned at the front end of the attachment.

Handlebars are known which consist of two pieces of a tube having the central part, that is, the part near the front fork tube, placed longitudinally, that is, parallel to the direction of movement of the bicycle.

In order to use the above mentioned attachments it is necessary to apply either fasteners or clamps or jaws to the traditional handlebars; these connect the attachments in two parts to the traditional handlebars.

There are neither stems, nor jaws, nor other devices that make it possible to use said attachments independently of the traditional handlebars.

From DE-U 93 00 832 a compound handlebar is known that comprises the features of the preamble of claim 1.

However, in this known handlebar the clamping element is firmly fixed to the ends of the two parallel tubes which has the drawback that there is no possibility to adjust the position of the handlebar independently to the two parallel tubes. For adjusting the position of the handlebar, the whole U - shaped tube must be shifted in the jaws of the stem element, which has the further disadvantage that the inner end of the U-shaped tube projects by a disturbing length against the driver's body when the handlebar is positioned very close to the stem element.

It is an object of the invention to provide a compound adjustable handlebar which allows to adjust the distance of a traditional handlebar from the saddle and to install attachments on the bicycle independently of the presence and of the type of the traditional handlebar.

According the invention, this object is achieved by a compound adjustable handlebar having a coupling device and comprising
- two parallel tubes,
- an angular stem element to be fixed to the fork of a bicycle and provided with two parallel jaws, positioned side by side so as to receive the parallel tubes,
- a clamping element having two parallel jaws to be fastened to said two tubes and a third jaw extending in the horizontal direction orthogonal to said two parallel jaws and holding the handlebar,
characterised in that said clamping element is slidably mounted, by means of its two parallel jaws, on said parallel tubes such that the clamping element and the stem element may be independently registered to each other.

The angular stem element is provided with a first seat in which the fork is housed; the other side of the angular stem element is larger and has two parallel jaws placed side by side in the direction of movement of the bicycle. These two jaws are tightened by means of two independent screws or a single screw acting on the two jaws at the same time. Said jaws house an attachment or two simple pieces of tube, holding them.

The clamping element can be fastened to the parallel linear sections of the attachment or of the two parallel tubes held in the parallel jaws of the clamping element. Two of its jaws are parallel and spaced from each other like the parallel jaws of the angular stem element. The third jaw is horizontal and orthogonal to the other two jaws and houses the traditional handlebar.

The angular stem element is provided with a lower tube to be housed in the fork like a normal handlebar stem arranged such that the axes of the jaws extend in the direction of movement of the bicycle. In said stem element, either the attachment for a different riding posture or two simple tubes connected with each other at their ends may be mounted.

The compouned adjustable handlebar according to the invention allows to adapt the position of the handlebars according to the cyclist's needs. It can be raised or lowered by loosening the stem fastening screw which acts on the fork in order to raise or lower the whole stem element; finally the fastening screw is tightened again. To move the handlebar grips forward or backward it is sufficient to loosen the fastening screw or screws of the parallel jaws of the angular stem element, to put the handlebar in the desired position and to tighten the screw or screws of the jaws again.

Similarly, it is possible to loosen the screw which tightens the two parallel jaws of the clamping element, in order to be able to adjust the position of the traditional handlebar with reference to the attachment and to the fork.

Further, it is possible to move the two separate handlebar grips at the same time, in such a way as to make them advance and go back maintaining their relative position and therefore their distance from the ground. This result is achieved by means of a clamping element tightened in a single point and shaped so that it can receive both grips.

The clamping element may be made from a single metal block provided with two seats where the two grips of the handlebar are inserted. The central part of the clamping element is provided with a special seat which houses a fastening element for locking the two tubes in said seats. These two seats are semicircular and may be provided with a series of teeth or protrusions in their inner part to ensure safe locking concentrated in precise areas. Said safety clamp may be inserted either in the front or in the rear of the stem element, according to the distance of the handlebar from the cyclist.

The invention will now be described by way of example and with reference to the accompanying drawings.

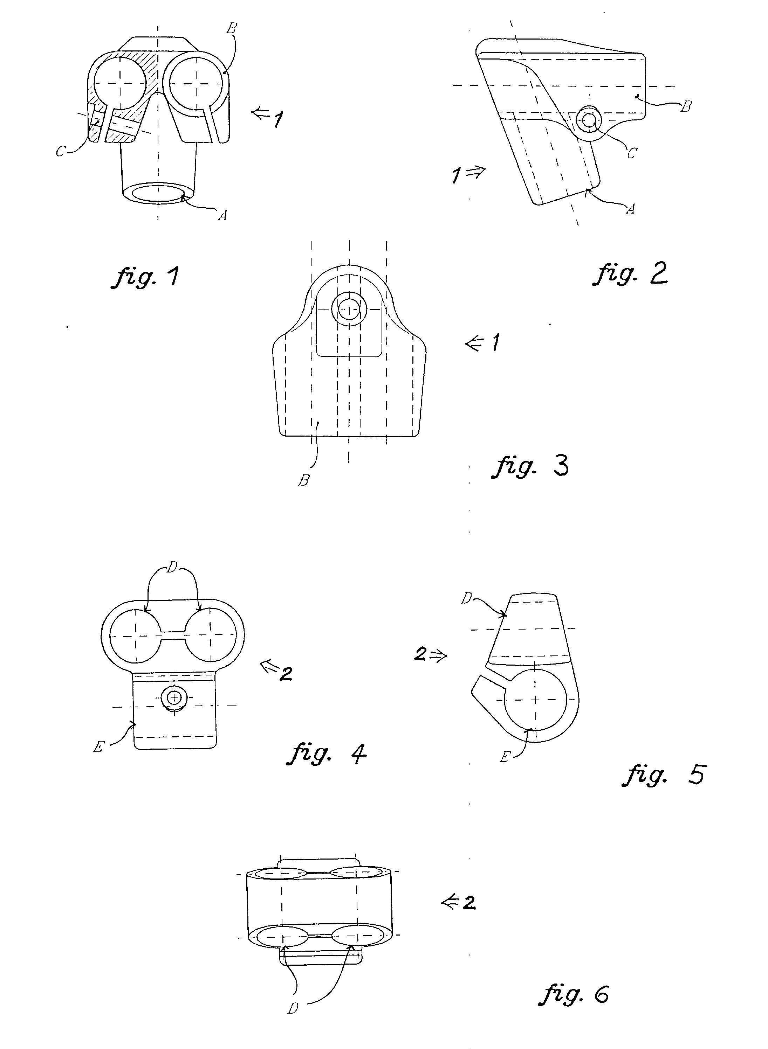

Figures 1, 2 and 3 show three views of the angular stem element 1 provided with a seat A for the connection to the fork and provided with two jaws B having fastening screws C to house two tubes T.

Figures 4, 5 and 6 show three views of the clamping element 2 with three jaws D, E, two of which are parallel (D) and suitable for mounting on the linear sections of the tubes T, while the third jaw E is suitable for installation on any traditional handlebar M.

Figures 7 and 8 show two different applications of the compound adjustable handlebar.

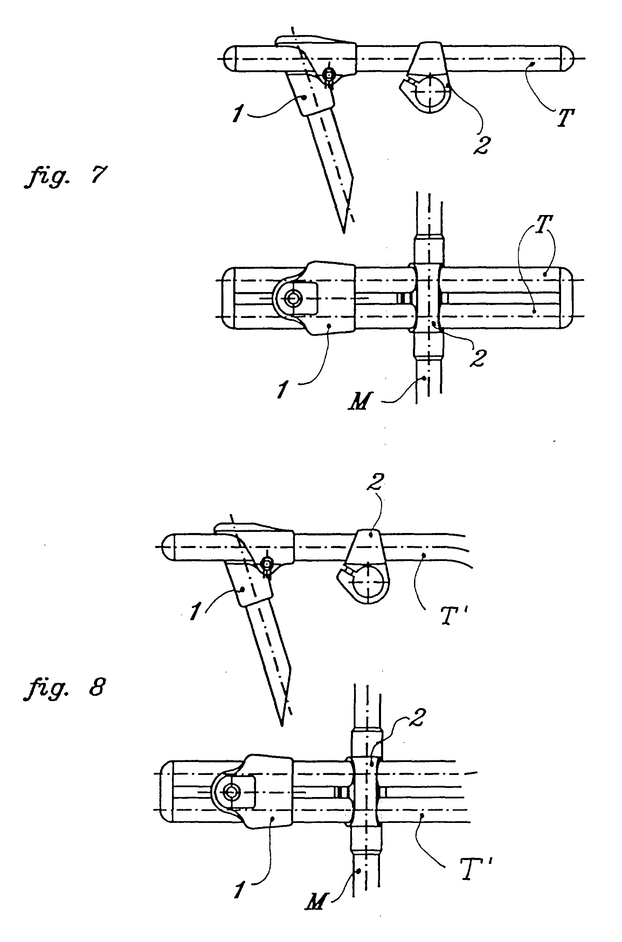

In Figure 7 the angular stem element 1 holds two tubes T on which the clamping element 2 supporting a traditional handlebar M is installed.

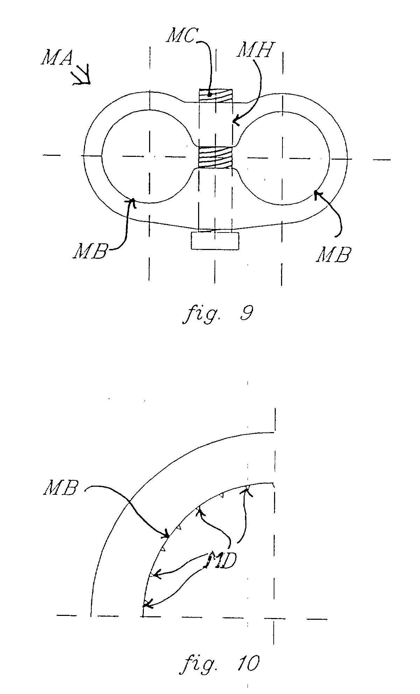

In Figure 8 the stem element 1 holds two tubes T' allowing a different riding posture, on the linear sections of which the clamping element 2 supporting the traditional handlebar M is applied. Said rectilinear sections are housed in the jaws B of the angular stem element 1.

Figure 9 shows a safety clamp MA made in a single piece and provided with two seats MB into which the two tubes T have to be introduced and wich are spaced form each other by means of a fastening element MC inserted in a through hole MH.

Figure 10 shows one fourth of the section of one of the two seats MB provided in its inner part with small protrusions MD which concentrate the tightening strength of the fastening element MC on precise points of the handlebars.

## Claims

1. Compound adjustable handlebar having a coupling device and comprising
- two parallel tubes (T),
- an angular stem element (1) to be fixed to the fork of a bicycle and provided with two parallel jaws (B), positioned side by side so as to receive said two parallel tubes (T),
- a clamping element (2) having two parallel jaws (D) to be fastened to said two tubes (T) and a third jaw (E) extending in the horizontal direction orthogonal to said two parallel jaws (D) and holding the handlebar (M),
characterised in that said clamping element (2) is slidably mounted, by means of its two parallel jaws (D), on said parallel tubes (T) such that the clamping element (2) and the stem element (1) may be independently registered to each other.

2. Compound adjustable handlebar according to claim 1, wherein said two parallel tubes (T) are secured to each other by means of a safety clamp (MA) consisting of a single piece with fastening element (MC) and two seats (MB) housing said parallel tubes (T).

3. Compound adjustable handlebar according to claim 2, wherein cuts and protrusions (MD) are provided on the inner surface of the seats (MB).

4. Compound adjustable handlebar according to any of the preceding claims, wherein the angular stem element (1) and the clamping element (2) are each made in a single piece.

## Patentansprüche

1. Zusammengesetzte, einstellbare Lenkstange mit einer Kupplungsvorrichtung und umfassend
- zwei parallele Rohre (T),
- ein winkelförmiges Schaftelement (1), das an der Radgabel eines Fahrrades zu befestigen ist und zwei parallele, nebeneinander angeordnete Klemmbacken (B) für die Aufnahme der beiden parallelen Rohre (T) aufweist,
- ein Einspannelement (2) mit zwei parallelen Klemmbacken (D) für die Befestigung an den beiden Rohren (T) und mit einer dritten Klemmbacke (E), die sich in horizontaler Richtung rechtwinklig zu den beiden parallelen Klemmbacken (D) erstreckt und die Lenkstange (M) trägt,
dadurch gekennzeichnet, daß das Einspannelement (2) über seine beiden parallelen Klemmbacken (D) verschiebbar auf den parallelen Rohren (T) angebracht ist, so daß das Einspannelement (2) und das Schaftelement (1) unabhängig voneinander einstellbar sind.

2. Zusammengesetzte, einstellbare Lenkstange nach Anspruch 1, dadurch gekennzeichnet, daß die beiden parallelen Rohre (T) mittels einer Sicherheitsklemme (MA) aneinander befestigt sind, die einstückig ausgebildet ist und aus einem Befestigungselement (MC) und zwei Sitzen (MB) für die Aufnahme der parallelen Rohre (T) besteht.

3. Zusammengesetzte, einstellbare Lenkstange nach Anspruch 2, dadurch gekennzeichnet, daß in der Innenfläche der Sitze (MB) Einschnitte und Vorsprünge (MD) ausgebildet sind.

4. Zusammengesetzte, einstellbare Lenkstange nach einem der vorhergehenden Ansprüche, dadurch gekennzeichnet, daß das winkelförmige Schaftelement (1) und das Einspannelement (2) jeweils einstückig ausgebildet sind.

## Revendications

1. Guidon composé réglable présentant un dispositif d'accouplement et comprenant
- deux tubes parallèles (T),
- un élément angulaire de potence (1) destiné à être fixé à la fourche d'une bicyclette et comprenant deux mâchoires parallèles (B) positionnées côte à côte et aptes à loger les deux tubes parallèles (T),
- un élément de serrage (2) comprenant deux mâchoires parallèles (D) pour la fixation aux deux tubes (T) et une troisième mâchoire (E) qui s'étend horizontalement et orthogonalement par rapport auxdites deux mâchoires parallèles (D) et qui porte le guidon (M), caractérisé par le fait que l'élément de serrage (2) est monté au moyen de ses deux mâchoires paralléles, et de façon à pouvoir se déplacer, sur les deux tubes parallèles (T), de sorte que l'élément de serrage (2) et l'élément de potence (1) peuvent être ajustés indépendamment l'un par rapport à l'autre.

2. Guidon composé réglable selon la revendication 1, caractérisé par le fait que lesdits deux tubes parallèles (T) peuvent être fixés l'un à l'autre au moyen d'une mordache de sécurité (MA) faite d'une seule pièce et comprenant un élément de serrage (MC) et deux sièges (MB) pour le logement des tubes parallèles (T).

3. Guidon composé réglable selon la revendications 2, caractérisé par le fait que la surface interne desdits sièges (MB) présente des entailles et des saillies (MD).

4. Guidon composé réglable selon une quelconque des revendications précédentes, caractérisé par le fait qu'aussi bien l'élément angulaire de potence (1) que l'élément de serrage (2) sont fait chacun d'une seule pièce.
